# EUROPEAN PATENT SPECIFICATION

(11) **EP 2 023 582 B1**
(45) Date of publication and mention of the grant of the patent: **21.12.2011**
(21) Application number: 07113468.8
(22) Date of filing: 30.07.2007
(51) Int. Cl.: H04M 1/2745, G06F 3/048

(54) **Method and system for generating ordered address lists**
Verfahren und System zum Erzeugen einer geordneten Adressenliste
Procédé et système de génération de listes ordonnées d'adresses

(43) Date of publication of application: 11.02.2009
(73) Proprietor: RESEARCH IN MOTION LIMITED, Waterloo, Ontario N2L 3W8 (CA)
(72) Inventor: Castell, David, Waterloo Ontario N2L 5P3 (CA); Lazaridis, Mihal, Waterloo Ontario N2T 2K1 (CA)
(74) Representative: Moore, Barry

(56) References cited:
- EP-A- 0 269 364
- EP-A- 1 760 645
- WO-A-2007/072455
- US-A1- 2004 203 949
- US-A1- 2005 188 312
- US-A1- 2006 035 632
- US-A1- 2007 067 401
- US-B1- 6 952 805

## Description

The present invention relates generally to user interfaces for communication applications. More particularly, the present invention relates to improving the functionality of such a user interface for multiple applications.

Many modern communication devices are multi-functional. They may be configured to allow users to engage in, for example, electronic mail ("e-mail"), short message service ("SMS") communications, multimedia messaging services ("MMS") communications, personal identification number to personal identification number ("PIN to PIN") communications and telephone communications. It is now common for a mobile device to feature different applications for some or all of these communications types.

Some email applications display a list of most recently used recipients. These lists provide "proposed" or "prospective" contact choices to the user in the hope of saving time. In some cases, these lists are updated as a user makes entries in the destination field of a communication that is being composed. For instance, email software can present a user with a list of recent destination addresses beginning with a particular letter when a user enters that letter in a destination field. An exemplary user interface for mobile devices implementing such lists is disclosed in US Patent, Publication No. 2005/0188312. Such lists may order the suggested list of recipients according to a weighting function, such as the ones described in US Patent No. 6,952,805. Examples of such weighting functions typically include weighting based on frequency of use, or recency of use, but there has been little effort to develop other ordering schemes. This is particularly true in the case of address books shared by multiple applications, where the same ordering scheme is applied to each application, regardless of how the user uses it.

US2006/035632 is an example of a prior art a communication system in which communication attributes of previous communication events involving the communication device are monitored. Selection criteria are then established based on the monitored communication attributes and one or more adaptive recipient history lists are maintained, which correspond to contacts that are affiliated with the communication events satisfying the selection criteria. At least one of the adaptive recipient history lists is then presented to the user via the communication device, thereby allowing the user to select the intended recipient via more relevant, focused short lists of likely recipients.

In the communications apparatus disclosed in US2007067401 address book information and transmission/reception information about the transmission and reception of email messages is stored. Search criteria for retrieving email addresses to which an email message is to be sent are then set and used to retrieve email addresses from the transmission/reception information. A user can then select email addresses included in the address book information from the retrieved email addresses.

WO2007/072455 discloses a mobile device comprising a message creating unit which creates a message having one or more message attributes and/or a message content; a recipient database storing recipient identifiers representative of addressees; and an analyzing unit for analyzing the message attributes and/or the message contents and generating a recipient list of at least one recipient identification based on the analyzed message attributes and/or message contents

US2004203949 discloses a method for providing a best guess for a recipient of a message. The method includes identifying a pattern in the message; searching for the pattern in a pattern list comprising one or more patterns for each addressee in an address list; registering an addressee in a hit list when the pattern is in the pattern list; and determining a first addressee from the hit list and providing the first addressee as a best guess as a recipient of the message

EP1760645 discloses a method and device for predicting a list of possible additional recipients to add to an electronic message. Once the user indicates that there is a recipient for an electronic message, the device creates the list of possible additional recipients based on the occurrence of identified recipient in previous lists.

In accordance with one aspect of the present invention there is provided a method of sending a communication based on generating a list of prospective contacts for said communication by a communication device in accordance with claim 1.

In accordance with another aspect of the present invention there is provided a communication device in accordance with claim 11.

In accordance with a further aspect of the present invention there is provided a computer program product claim 14.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Fig. 1 is a block diagram of a mobile device in one example implementation;
Fig. 2 is a block diagram of a communication subsystem component of the mobile device of Fig. 1;
Fig. 3 is a block diagram of a node of a wireless network;
Fig. 4 is a block diagram illustrating further aspects of the mobile device of Fig. 1;
Fig. 5 is a conceptual illustration of an exemplary address book;
Fig. 6 is a conceptual illustration of an exemplary MMS application-specific information store;
Fig. 7 is an illustration of an exemplary user interface screen where a list of proposed/prospective contacts is being shown to a user;
Fig. 8 is an illustration of an exemplary user interface screen where more than one list of proposed/prospective contacts is being shown to a user;
Fig. 9 is an illustration of an exemplary user interface screen where a user has already composed a message and chosen one recipient, but has indicated that they wish to select an additional recipient, and the user interface is displaying a list of proposed/prospective contacts to the user;
Fig. 10 is an illustration of an exemplary method according to a specific example;
Fig. 11 is an illustration of an exemplary method of launching a communications application where the user selects a contact from a list of proposed contacts prior to launching the application; and
Fig. 12 is an illustration of an exemplary method whereby application-specific lists of proposed-contacts are generated.

### DESCRIPTION OF PREFERRED EMBODIMENTS

When using a mobile device with multiple communications applications, such as e-mail, SMS, MMS, PIN to PIN and telephone, users may favor one application more than another for a particular contact. Conversely, users may favor one contact more than another for a particular application. For example, a user might text message his or her spouse more often than they email them, but might prefer to email his or her supervisor rather than text message them. Mobile devices and the systems that support them are capable of storing information about a user's past communications with particular contacts. However, such information is not presently used to help predict the list of recipients based on the application or communication format being used to send that communication. The user of a mobile communications device with multiple communications options who prefers to text message his or her spouse but more frequently emails his or her supervisor is not assisted when presented with the name of the supervisor as a first choice when entering a destination for a text message. It is therefore desirable to provide a user interface capable of providing to the user a list of proposed communication recipients based on application-specific and/or communications format-specific contact information.

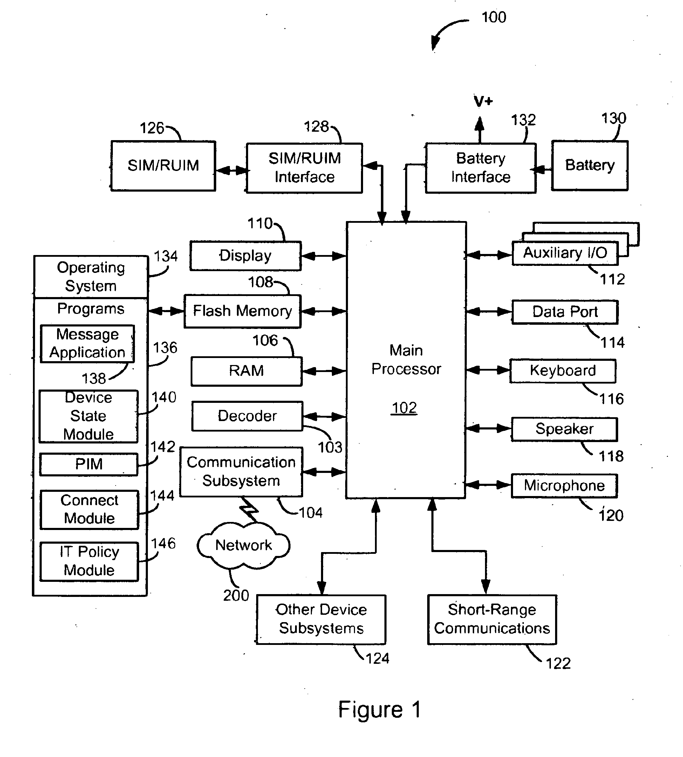

Embodiments of the invention will be discussed with reference to examples for mobile wireless devices, to which embodiments of the invention are well suited. However it should be appreciated that the invention can be implemented in a personal computer or other device which has the capability of multiple communications formats. To aid the reader in understanding the structure of a mobile device and how it communicates with other devices, reference is made to FIGS. 1 through 3.

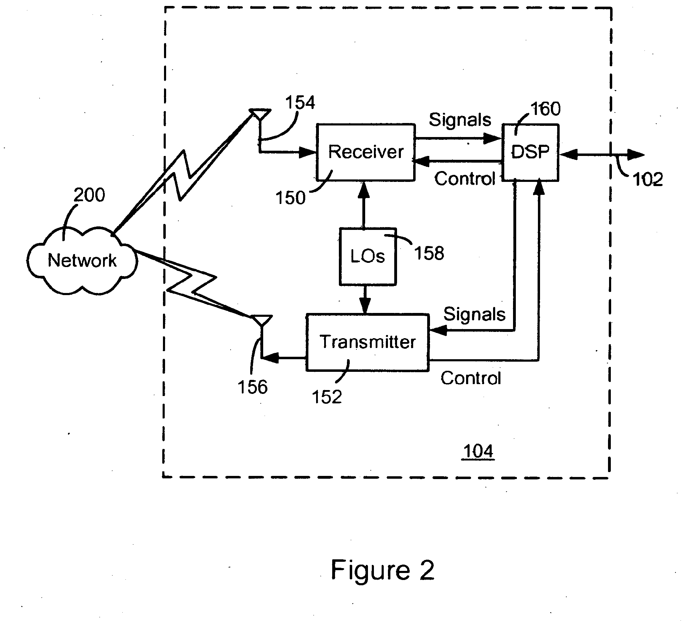

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication subsystem 104 receives messages from and sends messages to a wireless network 200 shown in FIG 2. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems.

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications 122 and other devices 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 requires a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200. By inserting SIM 126 into SIM interface 128, a subscriber can access all subscribed services. Services could include: web browsing and messaging such as e-mail, voice mail, PIN to PIN communications, SMS, and MMS. More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information.

Mobile device 100 is a battery-powered device and includes a battery interface 132 for receiving one or more rechargeable batteries 130. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture. Another application that may be loaded onto mobile device 100 would be a personal information manager (PIM) 142. A PIM 142 has functionality to organize and manage data items of interest to a subscriber, such as, but not limited to, e-mail, calendar events, voice mails, appointments, and task items. A PIM 142 application has the ability to send and receive data items via wireless network 200. PIM 142 data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an MMS message, a PIN to PIN message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 is an alphanumeric keyboard and/or telephone-type keypad. A composed item may be transmitted over network 200 through communication subsystem 104.

For voice communications, the overall operation of mobile device 100 is substantially similar, except that the received signals would be output to speaker 118, and signals for transmission would be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. An RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

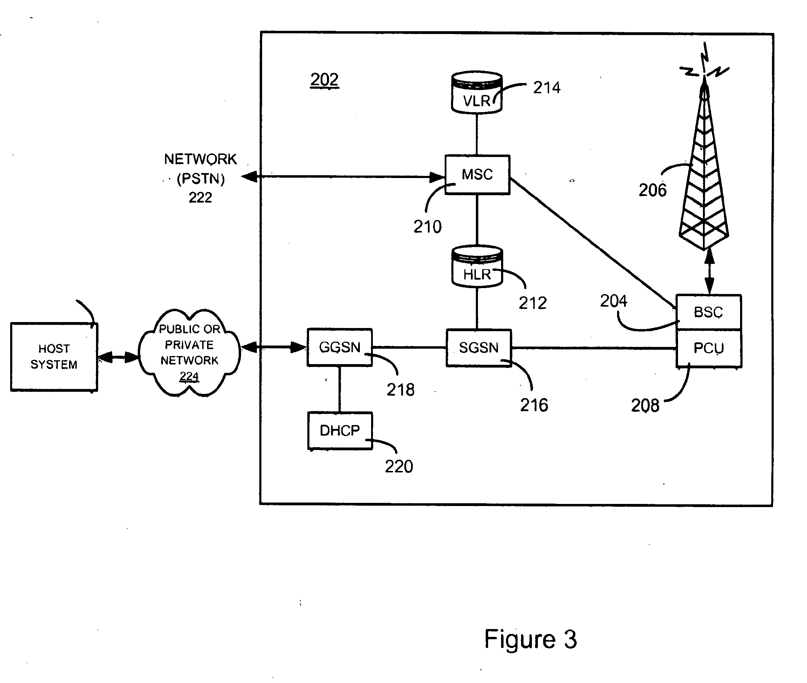

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSNs 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be de-allocated and the IP address returned to the IP address pool managed by DHCP server 220.

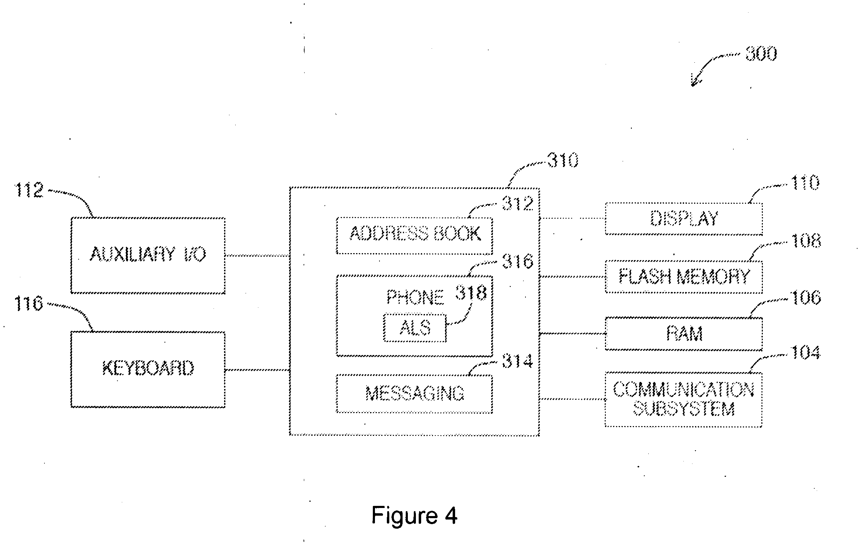

Referring now to FIG. 4, a block diagram illustrating further aspects of mobile device 100 of FIG. 1 is shown generally as 300. As noted earlier with reference to FIG. 1, microprocessor 102, in addition to its operating system functions, enables execution of software applications on mobile device 100. A set of applications that control basic device operations, including data and voice communication applications, will normally be installed on mobile device 100 during its manufacture. Operating system software and other software applications are typically stored in a persistent store (e.g. flash memory 106) or other store, on mobile device 100 or on a device coupled thereto. It will be understood that the operating system, software applications or parts thereof, may be temporarily loaded in a volatile store such as RAM 106. Other instructions and/or data received by the mobile device 100 and subject to processing may also be temporarily stored in RAM 106.

Software applications that are loaded or stored on mobile device 100 may be implemented as functional components or modules 310. Modules 310 interact with various components of mobile device 100. For instance, as shown by way of example in FIG. 4, modules 310 may interact with communication subsystem 104, RAM 106, flash memory 108, display 110, auxiliary I/O device(s) 112, and keyboard 116. Modules 310 may comprise, for example, an address book module 312, a messaging module 314 (e.g. for e-mail, SMS, PIN to PIN, or MMS messaging), and a phone application module 316.

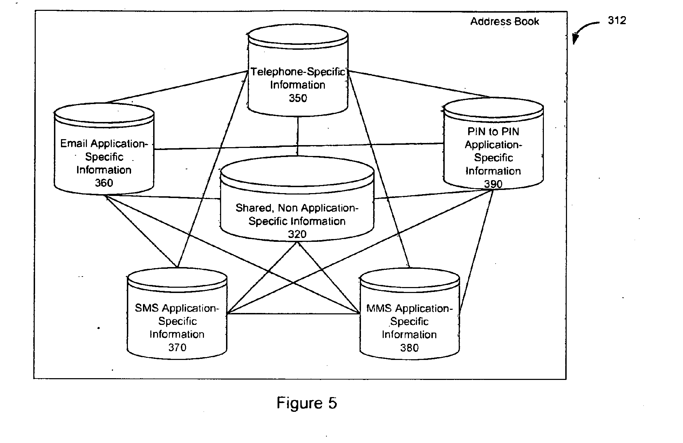

An exemplary address book module 312, which is described in greater detail below with reference to Figure 5, is generally configured to allow contact information (e.g. individual contact and company names, telephone numbers, messaging addresses, and other information) to be stored and managed. Messaging module 314 facilitates the sending and receiving of electronic messages over a wireless network 200 and/or other network.

Phone application module 316 is generally configured to facilitate voice communication between the user and other parties, including the placement of outgoing calls by the user and the reception of incoming calls on the mobile device 100.

Calls may be placed and received on a communication line specifically configured for voice communications. In certain embodiments, calls may alternatively or additionally be placed and received on other types of communication lines, including a communication line generally configured for data communications, or a communication line configured for both voice and data communications. For example, mobile device 100 may be configured to provide Voice over IP (VolP), Enterprise Voice, and/or video phone functionality.

Figure 5 provides a conceptual overview of an exemplary address book module 312. The address book module 312 can be embodied in volatile memory such as RAM 106, in non-volatile memory such as Flash Memory 108, in an element external to the device through the network 200 such as a server or host PC, or a combination of some or all of these elements. Because the address book module is represented conceptually, it can also be integrated with PIM 142 of Figure 1, or another non-illustrated component such as, for example: an information manager, a personal organizer, a personal calendar, a personal wiki, or any other store of contact information known to those of skill in the art. Contacts themselves can be individuals, mailing lists, lists of subscribers to a podcasting service, interfaces for blogging software, or any other potential destination for a communication.

In one embodiment of the invention, the address book module 312 comprises an application and database, which both stores contact information, and in addition tracks and stores usage information for each contact. The usage information includes application-specific and/or format-specific information about past communications. In other embodiments the address book can be implemented in a more conventional manner and a separate application and/or database is used to track and store the usage information. Either way, it should be appreciated that the address book module 312 can be implemented either on a system external to the mobile device 100 via network 200, on the mobile device itself 100, or some combination of the mobile device 100 and an external system.

The term "application-specific information" as used herein can mean any information identifying the application which sent or received a past communication, and/or any aspect of that past communication that was determined by the application. Thus, for example, application-specific information can indicate that a past communication was sent by application A rather than by application B, received by application C rather than by application D, or that options and formatting only available in application A were used. The term "format-specific information" as used herein can mean any information identifying the format in which a past communication was sent or received, and/or any aspect of that past communication that was determined by its format. Thus, for example, format-specific information can indicate that a past communication was sent in PIN to PIN format, or that a past e-mail message was received with specific Multipurpose Internet Mail Extensions (MIME) information attached, or that a past e-mail message was sent from a given location based on SMTP-AUTH server authorization information.

The data which makes up the information content of address book module 312 is conceptually represented as a series of information stores, which can include: shared non-application specific information 320, telephone specific information 350; email application specific information 360; SMS application specific information 370; MMS application specific information 380; and PIN to PIN application specific information 390. It should be appreciated by those skilled in the art that these application types are given as examples only, and that other application types (such as a push-to-talk application, a blogging application, a social-networking application, a news aggregator for RSS feeds, an icalendar scheduling application, or any other communications application) may have their own application-specific information, accessible by the address book module 312. It is also possible that some applications may be able to communicate using more than one communications format, in which case information specific to each format is stored such that it is possible to differentiate between past communications of each format. Further, although these various information types are conceptually illustrated as being distinct from one another, it should be appreciated that they may be stored in any manner known to those skilled in the art, ranging from a single data table in a single physical location to a multiplicity of distributed, loosely connected sets of data in many different physical or electronic locations. Similarly, although the various information stores 320, 350, 360, 370, 380 or 390 are illustrated as being inter-connected, they need not be inter-connected at all, and are illustrated as such merely to emphasize that contacts and usage information can be shared with multiple communications formats and/or applications. Further, the storage of this information can be entirely on the mobile device 100, or may exist externally, such as on servers or Host PCs and made accessible through network 200.

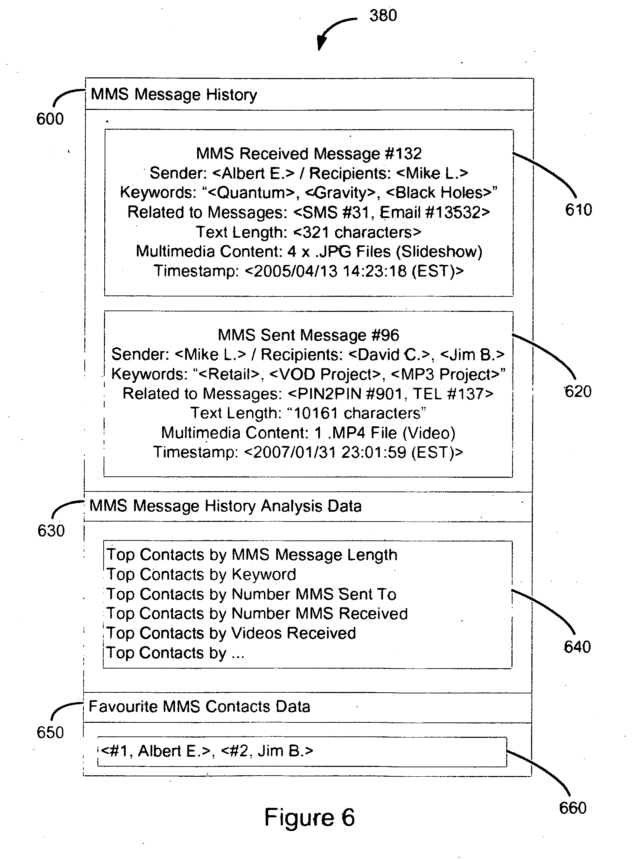

Exemplary information stores 320, 350, 360, 370, 380 or 390 contain information which allows the user interface to generate various lists of proposed contacts when a user indicates that the user wishes to select one or more recipients for a communication of a specified communication format. Figure 6 is an illustration of exemplary application-specific information, although it is intended as an example only, and persons of skill in the art will appreciate that other types of application-specific data may be stored, including information that users are not normally aware of such as protocol-related information, routing-information, headers, and other such features. The information store illustrated in Figure 6 by way of example is the MMS-Application Specific Information 380 of address book 312. The MMS Application-Specific Information can include, for example, an MMS message history 600, and can also include pre-computed proposed contact lists in MMS message history analysis data 630, although the lists need not be pre-computed if speed of analysis is not a design consideration. The MMS message history analysis data 600 includes two past MMS messages 610 and 620, as well as information about each MMS message 610 and 620. Information stored about past MMS message 610 includes, among other data the following information, which is listed by way of example: it is the 132 MMS message received by the user, it was sent by contact "Albert E." on April 13, 2005 at 14:23:18 (EST), it included the terms "Quantum, Gravity, and Black Holes", it was related to SMS message #31 (contained in SMS application-specific information 370) and Email message #13432 (contained in E-mail application-specific information 360), it was only 321 characters in length, and it included a slideshow of .JPG images. By contrast, exemplary information stored about past MMS Message 620 indicates that it was sent by the user on January 31, 2007 at 11:01:59 (EST), it had multiple recipients, it included keywords such as "Retail, VOD Project, MP3 Project", it was related to PIN to Pin message #901 and telephone call #137, it was a relatively lengthy 10161 characters in length, and included a single video.

Of course, more information can be stored about any message. Once usage information for messages of a given format has been stored, it becomes possible to use this information to differentiate between the contacts, such that a comparative analysis can produce weightings to generate lists of proposed contacts, such as the lists stored in the MMS message history analysis data 630 of the MMS application-specific information 380. Such pre-computed lists can include, for example, a list of top contacts based on one or more weightings. The list can be ordered by the same weighting(s) or according to some other criteria. In one embodiment, weightings can be assigned to contacts based on the length of MMS messages sent to the contacts, which for the two exemplary messages 610, 620 listed above would give priority of place to recipients David C. and Jim B. whenever the user was selecting a contact for a lengthy MMS message, but would give priority of place to Albert E. whenever the user was selecting a contact for a short MMS message. Other types of weightings might include: weightings based on keyword analysis, which would place Albert E. at the top of a list of proposed contacts when the user was composing MMS messages about "gravity"; weightings based on the direction of communication, such as whether a contact sends communications to the user more often (Albert E.) or whether the contact receives communications from the user more often (Jim B. and David C.). Still other types of weightings can include weightings based on multimedia content preferences; for example, communications with Albert E. tend to involve pictures, so the user interface might propose Albert E. as the first entry in a list of proposed contacts when the user seeks to forward an image file such as a .JPG or .GIF. Of course other types of MMS messages and criteria can be used, for example a user of a suitably equipped mobile handheld device can record an audio file, for example a dictation. Furthermore, the system can note that the user tends to send such a dictation to the user's assistant for transcription, and displays the assistant as a first choice for such a MMS. The possible proposed contact lists that can be generated is a function of the communications format and depends on the types and quantity of information stored about past communications. Of course, lists might also be pre-configured by the user themselves, such as by establishing a "favorites" list, as illustrated in Figure 6 by the favorite MMS contacts data 650, which indicates that certain contacts 660, in this case Albert E. and Jim B., should always be included in a list of proposed MMS contacts, or alternatively can be given a certain level of priority or weight when lists are generated.

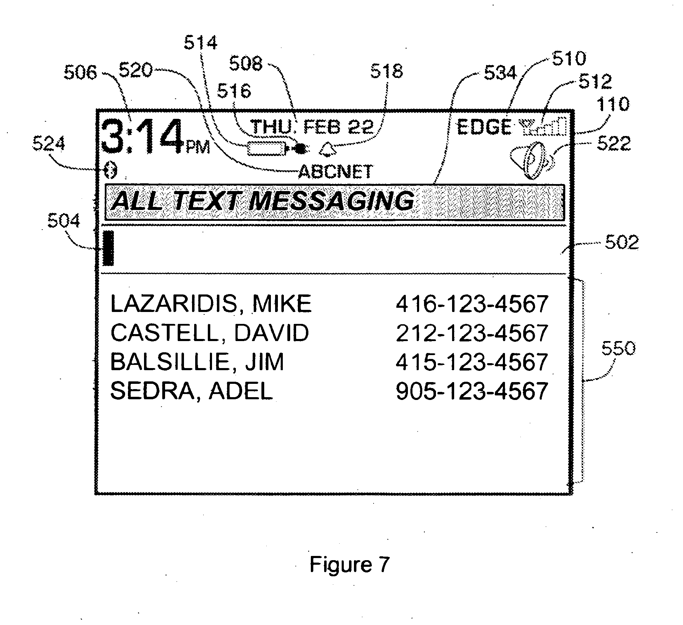

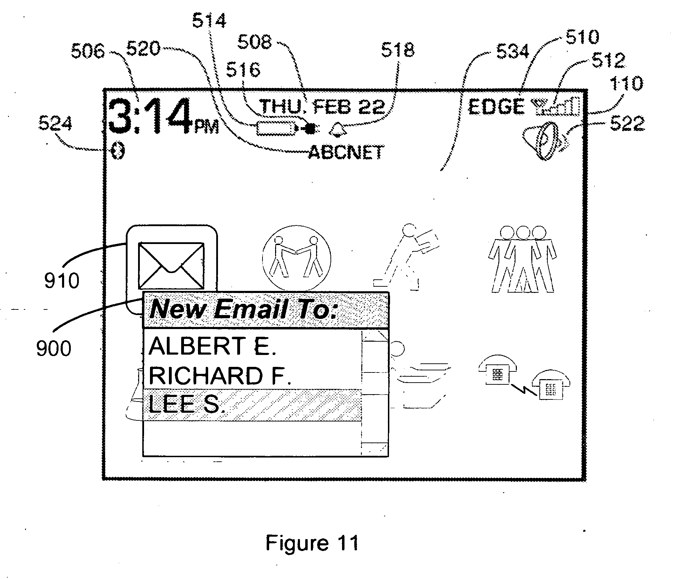

Figure 7 illustrates a user interface displayed in a display 110 of a mobile device 100 (FIG. 1), namely for a communication screen from which the user can place outgoing communications. The screen can display any user interface, such as a graphical user interface as illustrated by way of example in Figure 11 where a variety of icons are presented to the user as means of launching various applications. Once a particular application is launched by the user, a communication screen is displayed to the user, awaiting user input (e.g. a number to be dialed, an email address, a PIN, an SMS destination or an MMS destination). In the example of Figure 7, the user has already selected a text messaging application, as indicated by caption 534, and is being prompted to select a recipient. A destination entry field 502 is provided, and cursor 504 is settled within number entry field 502, indicating that the user may provide a destination (e.g. using a keyboard or keypad). General indicators may be displayed on the communication screen, including for example, time 506, date 508, network indicator 510, signal strength 512, battery strength 514, charging indicator 516, alarm indicator 518, service provider indicator 520, ringer indicator 522, and/or Bluetooth™ indicator 524. A multi-purpose area of the screen 550 is also provided for displaying lists, messages, and the like.

Lists of proposed contacts, which may be generated based on a number of different analyses, shorten the amount of time it takes a user to find and/or select a contact. Various types of analyses may be employed to generate a list of proposed contacts. These analyses can incorporate any method of generating proposed contact lists, as long as the communication format and/or communications application being used is a determining factor in the analysis. For example, SMS format-specific lists of proposed contacts may be generated, Email application-specific lists of proposed contacts may be generated. By way of further example, in the case where at least one application can produce more than one format, or where at least one format can be produced by more than one application, a list proposed contacts might be based on patterns of combined application and format use. The term "analysis", as used herein, is intended in its broadest sense, and includes everything from simple sorting and ordering operations, to statistical natural language processing of complicated texts. Furthermore, an analysis can be performed all at once, or in any number of steps, and can be performed either by the mobile device itself, or by an external system accessed via network 200. More advanced types of analysis can generate an ordered list by alphabetical ordering, or can generate an ordered list where the ordering is determined by some weighting function. Typical weighting functions include: weighting by recency of communication; weighting by frequency of communication; weighting by statistical analysis of the length of past messages; weighting by statistical analysis of keywords in past messages; weighting by statistical analysis of past exchanges of multimedia content; weighting by statistical analysis of the duration of past communications sessions (such as telephone calls or chat sessions); weighting by thread relationship (whether a message is a simple reply, or a reply to a reply, for example), weighting by font characteristics of past messages (for example, a given contact might always write in pink fonts) or any other technique according to which contacts with whom a user has exchanged communications of a given format can be differentiated from one another.

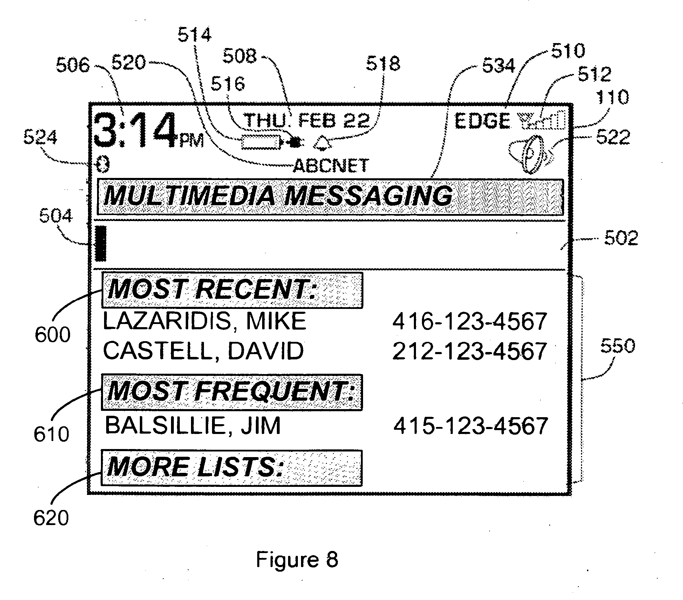

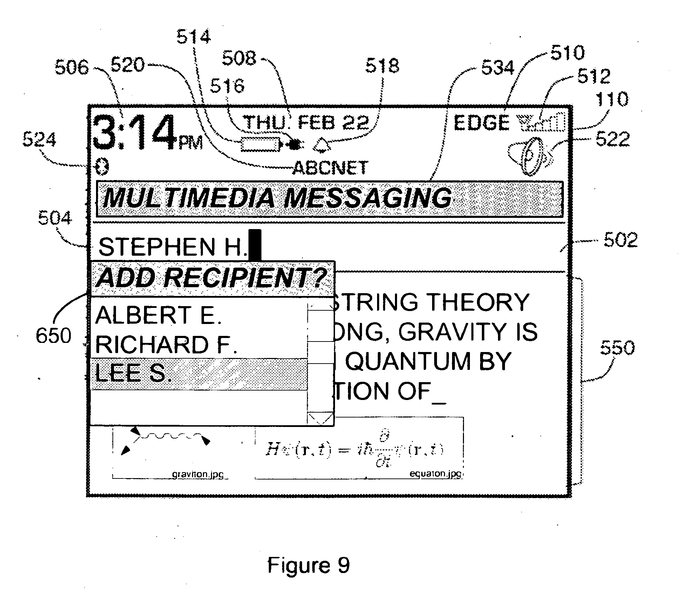

An example of a proposed contact list is illustrated in Figure 7: when the user is composing an SMS message, the method of generating the proposed contact lists can be an analysis which determines the contacts which were most recently used by the user when sending an SMS message, as indicated by the information store of SMS Application-Specific Information 370. In the example illustrated in Figure 7, the list of proposed contacts can be displayed in a multi-purpose area 550 of the screen for selection by an input device, although it could also be displayed as a context sensitive menu (also known as a "right-click" menu) such as the one illustrated in Figure 9. According to some embodiments, when multiple weightings are used, the list can be subdivided into multiple sub-lists according to the multiple weightings. These sublists can displayed simultaneously. For example, as is illustrated in Figure 8, a sub-list of most recent contacts 600, a sub-list of most frequent contacts 610, and an option of viewing more sub-lists 620 are provided in different regions of a multi-purpose area 550 of the screen.

The number of techniques and analyses that can be used to generate the proposed contact list is governed by the quantity and variety of data stored in the address book 312, as will be apparent to those skilled in the art. Because the analyses to be performed on the data depend on the specific format of past communications as well as application-specific information associated with those past communications, it is possible to create new techniques for the generation of proposed contact lists by using metrics and weightings that are dependent upon application-specific or format-specific information. For example, the technique of analyzing the frequency with which the user sends communications to a given contact can be extended in the case of MMS messaging to analyzing the frequency with which the user sends MMS messages containing a particular type of multimedia content to a given user. For example, if a user has generated an audio recording and provides an input indicating his or her desire to attach such a recording to a message, the system will display a selectable list of contacts to when the user has most recently (or frequently) sent audio files. Thus, by way of example, if a user prefers to send videos to his or her spouse, audio recordings to his or her assistant but would rather send pictures to co-workers, the interface can analyze the MMS application-specific information 380 to generate a proposed contact list listing the assistant first whenever the user is composing a message that includes an audio file. Furthermore, in such an example, the co-worker's contact information might be listed after the assistant's contact information, but a supervisor's contact information might not be listed at all if the user never sends MMS messages to them.

For example, let us assume that a user receives an audio file and listens to the audio file. The user interface can then present various options to the user, for example to delete, store or forward the file. Assume the user chooses to forward the file. The user interface will then open a compose screen, with the file attached and will then display a list of possible contacts based on the most recently used contacts to which the user has sent an audio file. Alternatively an empty address field will appear and the user interface will await input from the user before displaying contacts who begin with an input character, listed in most recently used order for contacts with whom the user has exchanged audio files (by sending them to the contact and/or receiving them from the contact).

In accordance with the claimed the invention, the proposed contact lists are made to depend on format-specific and/or application-specific information used in combination with the past usage of the mobile device 100 itself. By way of example, let us now assume that a user's mobile device 100 has an integrated camera, which can be either a still camera or video camera. Assume that based on past use of the mobile device, an analysis of application-specific and/or format-specific information reveals that the user has previously exchanged a large number of photos from the integrated camera with friend David by email. Let us further assume that the user has previously exchanged a large number of videos from the integrated camera with friend Jim by MMS. When the user next takes a video using the mobile device 100, the user interface might propose an option of launching an MMS capable-application with a proposed contact list including Jim as the first entry and David as the second entry, based on the fact that both have been sent camera-related content. On the other hand, when the user next takes a picture using the mobile device 100, the user interface might propose an option of sending an E-mail to a contact list including David as the first entry and Jim as the second entry, but the user interface might also propose sending an MMS communication including the picture, where Jim is listed as the first entry in the contact list and David is listed as the second entry. If the mobile device has an application that can generate ' communications in both MMS and Email formats, such an application might display a list based not only on past video and picture messaging by Jim and David, but also recency of contact or some other scheme by which the analysis can be weighted. It should be appreciated based on the foregoing example that any number of possible combinations of past format-specific, application-specific and even mobile device-specific information can be used to generate proposed contact lists based on past use.

Device-specific information may be stored and used as a basis for generating proposed contact lists dependent upon the devices which can be either integrated with, or connected to, mobile device 100. For example, mobile devices with integrated GPS might also include information in address book 312 that indicates where past communications were sent from, such that a proposed contact list would look different in Chicago than it would in New York or Amsterdam. The proposed contact list could also vary within a small geographical area, such that the list of proposed contacts might differ during the course of a cab ride from one end of Manhattan to the other. Location-specific information can be gleaned from routing information provided by network 200, which might in turn obtain location information from the PSTN 222 or the Internet 224. Location information can also be obtained using information stored in address book 312 based on the network 200 elements with which the mobile device 100 communicated in sending previous communications, protocol-specific information, past handshake information or any other means of determining the location where a user sent or received a past communication. In the absence of a specific indication of the user's present location, such an analysis could assume that location information related to the user's most recent communication is an indication of the user's present location.

It should be noted that multiple analyses of past communications can be used simultaneously to generate proposed contact lists. For example, the user interface might combine elements of a statistical analysis of the keywords found in past messages sent in a particular format, with information about the relationship of past threads of communication to the present message. For example, as illustrated in Figure 9, a user is composing an MMS message including the terms "string theory", "quantum" and "gravity" and has already selected "Stephen H." as a contact. Because the MMS application-specific data 380 of address book 312 shows that a past MMS message 610 containing similar keywords had already been received from contact "Albert E." and that message had a thread relationship to Email message #13532 and SMS message #31, the proposed contact list 650 generated by the user interface might include the names of the contacts associated with each of these communications. Thus, if a query of Email application-specific information 360 indicates that "Richard F." was the recipient of Email message #13532 and a query of SMS application-specific information 370 indicates that "Lee S." was the recipient of SMS message #31, the list of proposed contacts 650 can include "Albert E." "Richard F." and "Lee S." as proposed contacts. Of course, the specific analysis used to generate the list of proposed contacts 650 may be more or less complicated. A less complicated example would involve restricting the list of proposed contacts to contacts with whom only MMS messages have been exchanged. A more complicated example could retain the analysis described above, but could also restrict the proposed contact list to contacts with whom the user prefers to exchange ".JPG" image files, since the user has inserted two such images into the body of the message in the multi-purpose area of the screen 550. Thus, those skilled in the art will appreciate that a wide range of proposed contact lists might be developed, by taking advantage of application-specific and format-specific information about past communications.

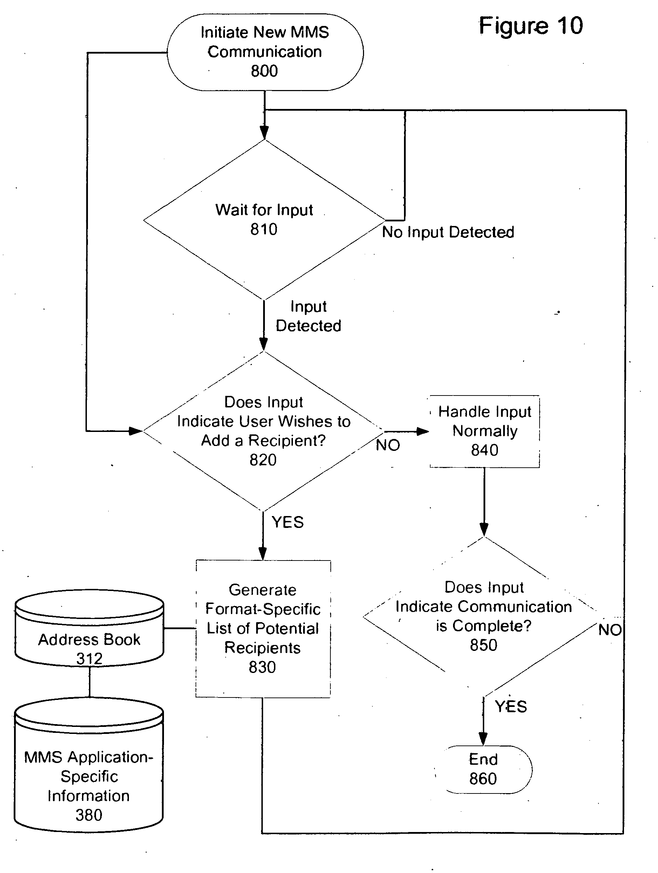

An exemplary method that can be used to implement the user interface according to an embodiment of the invention is illustrated in Figure 10, where the user is composing a new MMS message. In this example, the user has already selected an application which is capable of generating a message for the MMS communications format. It should be understood that although the example illustrated in Figure 10 represents a format-specific analysis based on past MMS communications, such a method can be adapted to the case where the analysis of past communications is to depend on application-specific information rather than format-specific information. It should also be understood that a combination of both format-specific and application-specific information can also be used as a basis for analyzing past communications to generate lists of proposed or prospective contacts. Furthermore, although the method of Figure 10 and the illustration of Figure 11 are described as being executed by the processor 102 of mobile device 100, the method of Figure 10 can be carried out by another system within mobile device 100, an external system accessed via network 200, and/or any other device or combination of devices capable of performing the required operations. The method includes a step where a new MMS communication is initiated 800, a step where the processor 102 waits for user input 810, a step where the processor 102 determines whether the input indicates that the user wishes to add a recipient 820, a step where the processor 102 generates a format-specific list of potential recipients 830, a step where the processor 102 handles input normally 840, a step where the processor 102 determines whether communication is complete 850, and an end step 860.

The method of Figure 10 begins when the user initiates a new MMS communication at step 800, which is a step that can be accomplished in any way known to those skilled in the art. The type of initiation 800 can provide additional information to help generate a list of proposed contacts, since messages may be composed from scratch, but their composition may also be initiated by a user who is replying to another message - in such a case the user interface can retain information about the communications thread in order to make a more thread-specific list of proposed contacts available to the user, if so desired. The type of initiation can also indicate that the method should proceed directly to step 820, when an application is initiated with a contact already selected, such as when a user operates a context-sensitive menu 900 related to an application icon 910 to launch the application, as illustrated in Figure 11. In such cases, the context-sensitive menu 900 can includes a list of proposed contacts generated by processor 102 according to the method of Figure 10. Accordingly, it is possible that the user interface may not begin to render the actual communications application until the method has reached step 810. After the initiation step 800, the method either proceeds to wait for input at step 810 if initiated normally, or proceeds directly to step 820 if initiated in response to a context-sensitive menu request elsewhere in the user interface. If input is detected at step 810, the method determines at step 820 whether the input is normal input, or whether it is input that indicates that the user wishes to add a recipient to the communication.

The determination performed by step 820 may determine that the user wishes to add a recipient in many different ways, for example: the user might have just begun composing the message and have placed a cursor in the destination field of the communication composing screen, or they might have clicked a trackball or other input device. As with the proposed contact lists themselves, the number of different ways in which the user can indicate that they wish to add a recipient to the communication is at least partially dependent on the communications format. For example, it may be possible to initiate new communications during a telephone call by initiating a three-way call using a list of proposed contacts generated in response to the user's input during a pre-existing phone call. In the case where the method does not detect that the user wishes to add a recipient, the input is handled normally at step 840, at which point the method may terminate at step 860 if the method detects at step 850 that the communication is complete. A completion of the communication can occur in as many different ways as the communications format allows: for example, completion of the method can occur when the user sends an e-mail, hangs-up a phone call, or cancels the SMS message composition without sending it.

If the method detected at step 820 that the user wishes to add a recipient to the communication, it proceeds to step 830 where an application-specific list of potential recipients is generated. To generate an application-specific list of potential recipients 830, the method queries both the address book 312 and information specific to the communication format of the intended communication, in the example of Figure 10 where an MMS message is being composed, MMS application-specific information 380 is queried. The types of proposed contact lists to be generated are a function of application and/or format-specific information, such that the list of potential recipients generated at step 830 depends on information contained in MMS application-specific information 380, although reference may also be made to any other information in address book 312, such as shared contact information 320, or information related to other applications or communications formats. Once the list of proposed contacts is generated, the method returns to waiting for input at step 810. The entire method is repeated as necessary until the communications is completed at step 860, as described above.

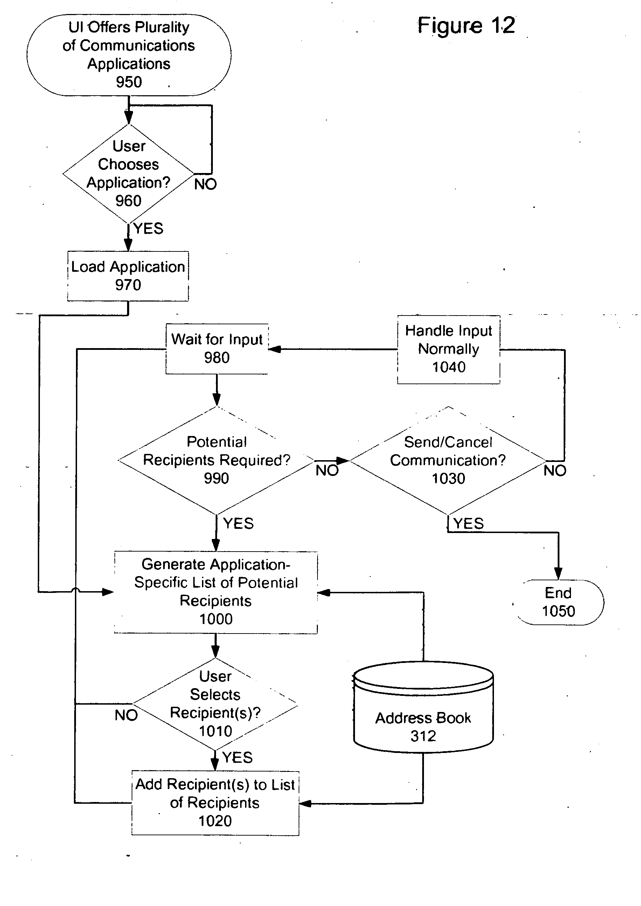

An exemplary method whereby application-specific lists of proposed-contacts is illustrated in Figure 12. The method illustrated in Figure 12 is intended as an example only, and although the method of Figure 12 is described as being executed by the processor 102 of mobile device 100, it can be carried out by another system within mobile device 100, an external system accessed via network 200, and/or any other device or combination of devices capable of performing the required operations. The method of Figure 12 comprises: a step where the user interface (UI) offers the user a choice of a plurality of communications applications 950, a step where the user chooses an application 960, a step where the processor 102 launches the application 970, a step where the processor generates an application-specific list of potential recipients 1000, a step where the user selects one or more recipients 1010, a step where the processor 102 adds any recipients selected at step 1010 to a list of recipients 1020 stored in memory, a step where the processor 102 waits for input 980, a step where the processor 102 detects whether a list of potential recipients is required by the user 990, a step where the processor 102 determines whether the user has indicated that the communication being composed should be sent or canceled 1030, a step where input is handled normally 1040, and an end step 1050.

The exemplary method of Figure 12 illustrates the user interface presenting to the user a choice of a plurality of communications applications 950. The plurality of communications applications need not all be available from the same screen or from every screen of the user interface, but for the purposes of the example illustrated by Figure 12, it should be possible to access more than one application using the user interface. However, it should be noted that a specific application may be selected by default, for example by the user indicating a file is of a particular file type associated with the default application to be forwarded. Once the user has completed the step of choosing an application 960, the processor 102 loads the application at step 970, although it should be noted that timing of the launch of the application itself is not essential. For instance, the application need not be loaded immediately in a context such as the one illustrated by way of example in Figure 11 and described above, where the application would be loaded after a contact has been selected from a context-sensitive menu generated according to the method such as the method of Figure 10 or Figure 12. For the purposes of the example illustrated in Figure 12, however, the application is loaded before the processor performs the step where the processor generates an application-specific list of potential recipients 1000. At step 1000, the processor will query the address book 312 for application-specific information sufficient to generate a list of potential recipients based on the user's past communications sent or received by the chosen application, analyze that information, and then generate an application-specific list of potential recipients, which can be displayed to the user. It should be noted that the list generated at step 1000 need not be displayed to the user immediately, and can, in alternative embodiments of the invention, be pre-computed for later display at this step. In the example of Figure 12, the application-specific list of potential recipients is displayed to the user at step 1000. If the user then selects one or more recipient(s) from the list of potential recipients at step 1010, the processor 102 adds the selected recipient(s) to a list of recipients using information from address book 312. Regardless of whether the user selects a recipient from the list of potential recipients at step 1010, the processor proceeds to wait for further input at step 980 until further input is detected from the user. Once input is detected from the user, the processor determines whether a list of potential recipients is required at step 990. This detection step 990 can respond to any kind of user input that indicates that the user is either about to choose or has begun to choose a proposed recipient, and can even respond as the user is composing a message. Examples of user input that can indicate that a list of potential recipients is required include, but are not limited to: a user beginning to type a recipient's name in a destination field 502, a user placing a cursor in a destination field 502, or a user clicking a trackball or other input device. Where the processor determines that a list of potential recipients is required, the execution returns to step 1000 as above, where a new proposed application-specific list of potential recipients is generated, and can be displayed to the user. If, however, the input detected at step 980 is not determined by the processor to indicate a requirement for a list of potential recipients at step 990, execution proceeds to step 1030. At step 1030, the processor 102 determines whether the input it detected at step 980 indicates that the user wishes to send the communication, or cancel the composition. If the processor 102 determines that the user wishes to either send the communication or cancel the composition, execution terminates at step 1050, but if the user has not made such an indication, the execution proceeds to step 1040. At step 1040, all other types of input are handled normally, as appropriate to the specific application chosen by the user at step 960, and execution proceeds to step 980 for the processor to await further input.

In the preceding description, for purposes of explanation, numerous details are set forth in order to provide a thorough understanding of the embodiments of the invention. However, it will be apparent to one skilled in the art that these specific details are not required in order to practice the invention. In other instances, well-known electrical structures and circuits are shown in block diagram form in order not to obscure the invention. For example, specific details are not provided as to whether the embodiments of the invention described herein are implemented as a software routine, hardware circuit, firmware, or a combination thereof.

Embodiments of the invention can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention can also be stored on the machine-readable medium. Software running from the machine-readable medium can interface with circuitry to perform the described tasks.

The above-described embodiments of the invention are intended to be examples only. Alterations, modifications and variations can be effected to the particular embodiments by those of skill in the art without departing from the scope of the invention, which is defined solely by the claims appended hereto.

## Claims

1. A method of sending a communication based on generating a list of prospective contacts for said communication by a communication device, said communication device including at least one integrated device operable to generate multi-media files, said communication device having access to contacts which are shared between a plurality of different communication formats, said method comprising:
detecting an indication of a user-selected communication format selected from said plurality of different communication formats;
determining a current communication is to include a multi-media file of a particular type;
generating a list of prospective contacts, the list of prospective contacts determined based on an analysis of usage information including a user's past communications for the selected communication format which included multi-media files of the type to be included in the current communication;
providing said user with said list containing at least one prospective contact based on said analysis;
receiving an input indicative of selection of at least one contact from said list; and
transmitting said communication including said multi-media file to said at least one selected contact.

2. The method of claim 1 wherein the analysis produces a weighting of the contacts based on said usage information, and said generating is based on said weighting, wherein said usage information differentiates between types of multi-media files such that the usage information for image files differs from the usage information for audio files.

3. The method of claim 2 wherein the generating includes ordering the list based on the weighting.

4. The method of any one of claims 1 to 3 wherein said usage information further includes past communications with each contact for each communication format.

5. The method as claimed in claim 2 or claim 3 wherein said weighting is primarily based on communications for each contact using the selected communication format, but in addition considers communications for said plurality of different communication formats.

6. The method as claimed in any one of the preceding claims further comprising receiving an input from said user and updating said list based on said input to only include contacts based on said input.

7. The method of claim 2 or claim 3 wherein the weighting is at least partially based on any one or any combination of:
how recently the user communicated with each contact for the selected communication format;
how frequently the user communicates with each contact for the selected communication format;
an analysis of the length of messages exchanged with each contact for the selected communication format;
an analysis of keywords found in past messages exchanged with each contact for the selected communication format;
a user-defined identification of an ordering priority for each contact for the selected communication format;
an analysis of past exchanges of multimedia content with each contact; an analysis of the duration of past communications sessions with each contact;
a relationship of each contact with at least one previous communication linked to the communication via a thread relationship; or
a geographical location of the user and on an analysis of geographical locations from which past communications were sent.

8. The method of any one of claims 2, 3 or 7 wherein said analysis produces multiple weightings, and said generating is based on multiple weightings.

9. The method as claimed in claim 8 and wherein said list is subdivided into multiple sub-lists according to the multiple weightings, and wherein said multiple sub-lists are displayed simultaneously.

10. The method as claimed in claim 9 wherein each sub-list is displayed in a different region of a display of said communication device.

11. A communication device comprising a processor, a display, a machine readable memory and at least one integrated device capable of generating a media file of at least one media type, wherein the machine readable memory stores software instructions which when executed by said processor, causes said device to perform the steps of the method of any one of claims 1 to 10.

12. The communication device of claim 11 wherein the integrated device comprises any one of a camera, a video camera, or an audio recording device.

13. The communication device of claim 11 wherein the at least one integrated device comprises both a camera, and an audio recording device and the usage information differentiates between media types, such that the usage information for captured image files from the camera differs from the usage information for recorded audio files.

14. A computer program product having a machine-readable medium having encoded thereon computer-executable instructions for causing a computing device to perform the steps of the method of any one of claims 1 to 10.

## Patentansprüche

1. Verfahren zum Senden einer Kommunikation basierend auf einem Erzeugen einer Liste von voraussichtlichen Kontakten für diese Kommunikation durch eine Kommunikationsvorrichtung, wobei die Kommunikationsvorrichtung zumindest ein integriertes Gerät umfasst, welches Multimediadateien erzeugen kann, wobei die Kommunikationsvorrichtung Zugang zu Kontakten hat, welche von einer Vielzahl von verschiedenen Kommunikationsformaten geteilt werden, wobei das Verfahren die Schritte umfasst:
Detektieren eines Hinweises bezüglich eines benutzerausgewählten Kommunikationsformats, welches aus der Vielzahl an verschiedenen Kommunikationsformaten ausgewählt ist;
Bestimmen, dass eine gegenwärtige Kommunikation eine Multimediadatei eines speziellen Typs beinhalten soll;
Erzeugen einer Liste von voraussichtlichen Kontakten, wobei die Liste voraussichtlicher Kontakte basierend auf einer Analyse von Benutzungsinformationen bestimmt wird, welche vergangene Kommunikationen eines Benutzers für das ausgewählte Kommunikationsformat einschließt, die Multimediadateien des Typs umfassten, der in der gegenwärtigen Kommunikation aufzunehmen ist;
Bereitstellen der Liste dem Benutzer, wobei die Liste zumindest einen voraussichtlichen Kontakt beinhaltet, basierend auf der Analyse;
Empfangen einer Eingabe, welche eine Auswahl zumindest eines Kontakts von der Liste angibt; und
Übermitteln der Kommunikation, welche die Multimediadatei beinhaltet, zu dem zumindest einen ausgewählten Kontakt.

2. Verfahren gemäß Anspruch 1, wobei die Analyse eine Gewichtung der Kontakte basierend auf der Benutzungsinformation vornimmt, und wobei das Erzeugen auf der Gewichtung basiert, wobei die Benutzungsinformation zwischen Typen von Multimediadateien differenziert, so dass sich die Benutzungsinformation für Bilddateien von der Benutzungsinformation für Audiodateien unterscheidet.

3. Verfahren gemäß Anspruch 2, wobei das Erzeugen ein Ordnen der Liste beinhaltet, basierend auf der Gewichtung.

4. Verfahren gemäß einem der Ansprüche 1 bis 3, wobei die Benutzungsinformation ferner vergangene Kommunikationen mit jedem Kontakt für jedes Kommunikationsformat beinhaltet.

5. Verfahren wie in Anspruch 2 oder Anspruch 3 beansprucht, wobei die Gewichtung primär auf Kommunikationen für jeden Kontakt basiert, der das ausgewählte Kommunikationsformat benutzt, aber zusätzlich Kommunikationen für die Vielzahl an verschiedenen Kommunikationsformaten berücksichtigt.

6. Verfahren wie in einem der vorhergehenden Ansprüche beansprucht, welches ferner umfasst Empfangen einer Eingabe von dem Benutzer und Aktualisieren der Liste basierend auf der Eingabe, um nur Kontakte basierend auf der Eingabe zu umfassen.

7. Verfahren gemäß Anspruch 2 oder Anspruch 3, wobei die Gewichtung zumindest teilweise auf einem Folgenden oder einer Kombination basiert von:
wann der Benutzer zuletzt mit jedem Kontakt kommuniziert hat, für das ausgewählte Kommunikationsformat;
wie häufig der Benutzer mit jedem Kontakt kommuniziert, für das ausgewählte Kommunikationsformat;
eine Analyse der Länge der Nachrichten, die mit jedem Kontakt ausgetauscht wurden, für das ausgewählte Kommunikationsformat;
eine Analyse von Schlagwörtern, welche in vergangenen Nachrichten gefunden wurden, die mit jedem Kontakt ausgetauscht wurden, für das ausgewählte Kommunikationsformat;
eine benutzerdefinierte Identifizierung einer Sortierreihenfolge für jeden Kontakt, für das ausgewählte Kommunikationsformat;
eine Analyse vergangenen Austauschens von Multimediainhalt mit jedem Kontakt;
eine Analyse der Dauer vergangener Kommunikationssitzungen mit jedem Kontakt;
eine Beziehung jedes Kontakts mit zumindest einer vorhergehenden Kommunikation, die mit der Kommunikation durch eine Thread-Beziehung verbunden ist; oder
einen geografischen Ort des Benutzers und eine Analyse der geografischen Orte, von denen vergangene Kommunikationen gesendet wurden.

8. Verfahren gemäß einem der Ansprüche 2, 3 oder 7, wobei die Analyse mehrere Gewichtungen produziert, und das Erzeugen auf mehreren Gewichtungen basiert.

9. Verfahren wie in Anspruch 8 beansprucht, wobei die Liste in mehrere Unterlisten unterteilt ist, gemäß den mehreren Gewichtungen, und wobei die mehreren Unterlisten gleichzeitig angezeigt werden.

10. Verfahren wie in Anspruch 9 beansprucht, wobei jede Unterliste in einem unterschiedlichen Bereich einer Anzeige der Kommunikationsvorrichtung angezeigt wird.

11. Kommunikationsvorrichtung, welche einen Prozessor, eine Anzeige, einen maschinenlesbaren Speicher und zumindest ein integriertes Gerät umfasst, welches dazu in der Lage ist, eine Mediendatei zumindest eines Medientyps zu erzeugen, wobei der maschinenlesbare Speicher Softwareanweisungen speichert, die, wenn sie von dem Prozessor ausgeführt werden, die Vorrichtung dazu veranlassen, die Schritte des Verfahrens gemäß einem der Ansprüche 1 bis 10 auszuführen.

12. Kommunikationsvorrichtung gemäß Anspruch 11, wobei das integrierte Gerät eines von einer Kamera, einer Videokamera, oder eines Audioaufnahmegeräts umfasst.

13. Kommunikationsvorrichtung gemäß Anspruch 11, wobei das zumindest eine integrierte Gerät beides umfasst, eine Kamera und ein Audioaufnahmegerät, und die Benutzungsinformation zwischen Medientypen unterscheidet, so dass sich die Benutzungsinformation für erzeugte Bilddateien von der Kamera von der Benutzungsinformation für aufgenommene Audiodateien unterscheidet.

14. Ein Computerprogrammprodukt mit einem maschinenlesbaren Medium, welches computerausführbare Anweisungen darauf codiert hat, welche ein Rechnergerät dazu veranlassen, die Schritte des Verfahrens gemäß einem der Ansprüche 1 bis 10 auszuführen.

## Revendications

1. Procédé d'envoi d'une communication sur la base de la génération d'une liste de contacts potentiels pour ladite communication par un dispositif de communication, ledit dispositif de communication comportant au moins un dispositif intégré pouvant fonctionner pour générer des fichiers multimédia, ledit dispositif de communication accédant à des contacts qui sont partagés entre une pluralité de différents formats de communication, ledit procédé comprenant le fait :
de détecter une indication d'un format de communication sélectionné par l'utilisateur parmi ladite pluralité de différents formats de communication;
de déterminer qu'une communication en cours doit comporter un fichier multimédia d'un type particulier ;
de générer une liste de contacts potentiels, la liste de contacts potentiels déterminée sur la base d'une analyse d'une information d'utilisation comportant des communications antérieures de l'utilisateur pour le format de communication sélectionné comprenant des fichiers multimédia du type à inclure dans la communication en cours ;
de fournir audit utilisateur ladite liste contenant au moins un contact potentiel sur la base de ladite analyse ;
de recevoir une entrée indiquant la sélection d'au moins un contact à partir de ladite liste ; et
de transmettre ladite communication comportant ledit fichier multimédia audit au moins un contact sélectionné.

2. Procédé de la revendication 1 dans lequel l'analyse produit une pondération des contacts sur la base de ladite information d'utilisation, et ladite génération étant basée sur ladite pondération, où ladite information d'utilisation distingue entre les types de fichiers multimédia de sorte que l'information d'utilisation pour des fichiers image soit différente de l'information d'utilisation pour des fichiers audio.

3. Procédé de la revendication 2 dans lequel la génération comporte le classement de la liste sur la base de la pondération.

4. Procédé de l'une quelconque des revendications 1 à 3 dans lequel ladite information d'utilisation comporte en outre des communications antérieures avec chaque contact pour chaque format de communication.

5. Procédé tel que revendiqué dans la revendication 2 ou la revendication 3 dans lequel ladite pondération est principalement basée sur des communications pour chaque contact utilisant le format de communication sélectionné, mais considère en outre des communications pour ladite pluralité de différents formats de communication.

6. Procédé tel que revendiqué dans l'une quelconque des revendications précédentes comprenant en outre le fait de recevoir une entrée dudit utilisateur et de mettre à jour ladite liste sur la base de ladite entrée pour qu'elle ne comprenne que des contacts sur la base de ladite entrée.

7. Procédé de la revendication 2 ou de la revendication 3 dans lequel la pondération est au moins partiellement basée sur l'une quelconque ou une combinaison quelconque de :
à quel moment remonte la dernière communication entre l'utilisateur et chaque contact pour le format de communication sélectionné ;
la fréquence avec laquelle l'utilisateur communique avec chaque contact pour le format de communication sélectionné ;
une analyse de la longueur des messages échangés avec chaque contact pour le format de communication sélectionné ;
une analyse des mots-clés trouvés dans des messages antérieurs échangés avec chaque contact pour le format de communication sélectionné ;
une identification définie par l'utilisateur d'une priorité de classement pour chaque contact pour le format de communication sélectionné ;
une analyse des échanges antérieurs du contenu multimédia avec chaque contact ; une analyse de la durée des sessions de communication antérieures avec chaque contact ;
une relation de chaque contact avec au moins une communication précédente liée à la communication par l'intermédiaire d'une relation de fil de discussion ; ou
un emplacement géographique de l'utilisateur et sur une analyse d'emplacements géographiques à partir desquels les communications antérieures ont été envoyées.

8. Procédé de l'une quelconque des revendications 2, 3 ou 7 dans lequel ladite analyse produit une multitude de pondérations, et ladite génération est basée sur une multitude de pondérations.

9. Procédé tel que revendiqué dans la revendication 8 et dans lequel ladite liste est subdivisée en plusieurs sous-listes en fonction de la multitude de pondérations, et dans lequel ladite pluralité de sous-listes s'affichent simultanément.

10. Procédé tel que revendiqué dans la revendication 9 dans lequel chaque sous-liste s'affiche dans une région différente d'un écran du dispositif de communication.

11. Dispositif de communication comprenant un processeur, un écran, une mémoire lisible par machine et au moins un dispositif intégré capable de générer un fichier média d' au moins un type de média, dans lequel la mémoire lisible par machine stocke des instructions logicielles qui, lorsqu'elles sont exécutées par ledit processeur, amènent ledit dispositif à mettre en ouvre les étapes du procédé de l'une quelconque des revendications 1 à 10.

12. Dispositif de communication de la revendication 11 dans lequel le dispositif intégré comprend l'un(e) quelconque d'une caméra, d'une caméra vidéo, ou d'un dispositif d'enregistrement audio.

13. Dispositif de communication de la revendication 11 dans lequel l'au moins un dispositif intégré comprend à la fois une caméra, et un dispositif d'enregistrement audio et l'information d'utilisation distingue entre des types de médias, de sorte que l'information d'utilisation pour des fichiers image capturés par la caméra soit différente de l'information d'utilisation pour des fichiers audio enregistrés.

14. Produit de programme informatique ayant un support lisible par machine sur lequel sont codées des instructions exécutables par ordinateur destinées à amener un dispositif informatique à mettre en oeuvre les étapes du procédé de l'une quelconque des revendications 1 à 10.
